# EUROPEAN PATENT APPLICATION

(11) **EP 4 105 889 A1**
(43) Date of publication of application: **21.12.2022**
(21) Application number: 21772070.5
(22) Date of filing: 19.01.2021
(51) Int. Cl.: G06T 19/00

(54) **AUGMENTED REALITY PROCESSING METHOD AND APPARATUS, STORAGE MEDIUM, AND ELECTRONIC DEVICE**

(30) Priority: 18.03.2020 CN 202010192967
(71) Applicant: GUANGDONG OPPO MOBILE TELECOMMUNICATIONS CORP., LTD., Dongguan, Guangdong 523860 (CN)
(72) Inventor: ZENG, Fantao, Dongguan, Guangdong 523860 (CN)
(74) Representative: Penza, Giancarlo
(86) International application number: PCT/CN2021/072704
(87) International publication number: WO 2021/184952

(57) **Abstract**

An augmented reality processing method, an augmented reality processing apparatus, a computer readable storage medium, and an electronic device, relating to the technical field of augmented reality. The augmented reality processing method comprises: receiving an image uploaded by first device, and performing identification on the image to determine a target object of the image; if it is found, according to the type of the target object, that a type the same as the type of the target object exists in associated object types, identifying a region of interest of the target object; and analyzing anchor point information corresponding to the target object to enable a second device to render the anchor point information and the region of interest, and displaying the target object on the second device. The operation efficiency and accuracy in an augmented reality scene can be improved.

## Description

The present disclosure claims priority to Chinese patent application No. 202010192967.X, filed on March 18, 2020, entitled "AUGMENTED REALITY PROCESSING METHOD AND APPARATUS, STORAGE MEDIUM, AND ELECTRONIC DEVICE", the entire content of the above-mentioned application is hereby incorporated herein by reference.

### TECHNICAL FIELD

The present disclosure relates to the field of augmented reality (AR) technologies, and in particularly to, an AR processing method, an AR processing apparatus, a computer readable storage medium, and an electronic device.

### BACKGROUND

AR is a technology that integrates virtual information with the real world. In recent years, the AR technology has been extended to many application fields.

In the related art, a surrounding scene is usually scanned through a smart phone, and then a virtual object is placed in the scene to observe the virtual object in different positions and perspectives; or motions or behaviors of the virtual object are controlled through different interactive ways, so as to realize AR experiences.

However, in the above methods, all information processing processes need to be performed on a terminal device. Therefore, the information processing processes are significantly affected by performance of the terminal device itself, which makes accuracy and efficiency of operations performed in AR scenes low. In addition, the using of the terminal device as an AR platform would consume more resources, resulting in certain limitations in the scope of application.

### SUMMARY

The present disclosure provides an AR processing method, an AR processing apparatus, a computer readable storage medium, and an electronic device, thereby overcoming, at least to a certain extent, problems of poor operational accuracy and low operational efficiency.

According to an aspect of the present disclosure, an AR processing method is provided and implemented by a cloud server, including: receiving an image uploaded by a first device, and recognizing the image to determine a target object of the image; recognizing a region of interest (ROI) of the target object in response to finding, based on a type of the target object, a type in associated object types is the same as the type of the target object; and analyzing anchor point information corresponding to the target object to enable a second device to render the anchor point information and the region of interest and display the target object.

According to an aspect of the present disclosure, an AR processing apparatus is provided and applied to a cloud server, the apparatus includes: a target object recognition module, configured to receive an image uploaded by a first device, and recognize the image to determine a target object of the image; a region determining module, configured to recognize a region of interest of the target object in response to finding, based on a type of the target object, a type in associated object types is the same as the type of the target object; and an anchor analyzing module, configured to analyze anchor point information corresponding to the target object to enable a second device to render the anchor point information and the region of interest and display the target object.

According to an aspect of the present disclosure, a computer readable storage medium is provided and stored with computer programs therein, the computer programs are configured to, when executed by a processor, to implement the above AR processing method.

According to an aspect of the present disclosure, an electronic device is provided and includes: a processor; and a memory configured to store one or more programs therein, and the processor is configured to execute the one or more programs stored in the memory to implement the above AR processing method.

It should be understood that the above general description and the following detailed description are only exemplary and explanatory, and do not limit the present disclosure.

### BRIEF DESCRIPTION OF THE DRAWINGS

The drawings herein are incorporated into and form a part of the specification. The drawings illustrate embodiments in accordance with the present disclosure, and are used together with the specification to explain principles of the present disclosure. It is obvious that the drawings in the following description are only some embodiments of the present disclosure. For those skilled in the art, other drawings can be obtained from these drawings without paying creative labor. In the attached drawings:
FIG. 1 illustrates a schematic diagram of an exemplary system architecture to which an AR processing method or an AR processing apparatus may be applied according to an embodiment of the present disclosure.
FIG. 2 illustrates a schematic structural diagram of an electronic device according to an embodiment of the present disclosure.
FIG. 3 illustrates a schematic flowchart of an AR processing method according to an embodiment of the present disclosure.
FIG. 4 illustrates a schematic flowchart of recognizing a target object of an image according to an embodiment of the present disclosure.
FIG. 5 illustrates a schematic flowchart of converting anchor point information according to an embodiment of the present disclosure.
FIG. 6 illustrates a schematic diagram of specific processes of an AR processing method according to an embodiment of the present disclosure.
FIG. 7 illustrates a schematic block diagram of an AR processing apparatus according to an embodiment of the present disclosure.

### DETAILED DESCRIPTION OF EMBODIMENTS

Exemplary embodiments will be described more fully with reference to the accompanying drawings. However, the exemplary embodiments can be implemented in various forms, and should not be understood as limited to the embodiments set forth herein. On the contrary, providing these embodiments will make the present disclosure more comprehensive and complete, and comprehensively convey concepts of the exemplary embodiments to those skilled in the art. The described features, structures, or characteristics may be combined in one or more embodiments in any suitable manner. In the following description, many specific details are provided to give a full understanding of the embodiments of the present disclosure. However, those skilled in the art will realize that technical solutions of the present disclosure can be realized with omitting one or more of the specific details or adopting other methods, components, devices, steps, etc. In other cases, well-known technical solutions are not illustrated or described in detail to avoid distracting the subject and blurring various aspects of the present disclosure.

In addition, the attached drawings are only schematic diagrams of the present disclosure and not necessarily drawn to scale. The same reference numerals in the drawings represent the same or similar parts, so their repeated description will be omitted. Some block diagrams illustrated in the drawings are functional entities and do not necessarily correspond to physically or logically independent entities. These functional entities can be implemented in software, or in one or more hardware modules or integrated circuits, or in different networks and/or processor devices and/or microcontroller devices.

The flowcharts illustrated in the attached drawings are only exemplary illustrations, and do not necessarily include all steps. For example, some steps can be split, while some steps can be merged or partially merged, thus an order of actual execution may change according to actual situations. In addition, all the terms "first" and "second" below are only for the purpose of differentiation and should not be used as limitations of the present disclosure.

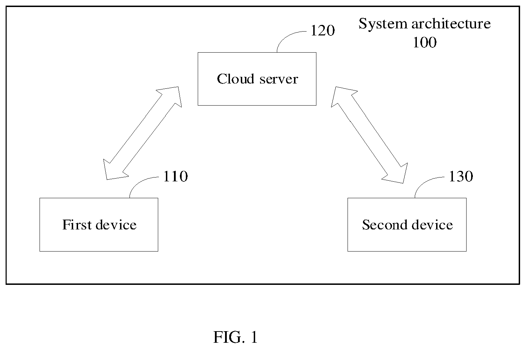

FIG. 1 illustrates a schematic diagram of an exemplary system architecture to which an AR processing method or an AR processing apparatus may be applied according to the embodiment of the present disclosure.

As illustrated in FIG. 1, a system architecture 100 may include a first device 110, a cloud server 120, and a second device 130. The number of the second device may be one or more, and types and locations of the plurality of second devices may be the same or different. A multi-user AR scene can be built by the first device, the cloud server and the second device.

The first device 110 may be a device that performs relocation and is a participating end of AR scenes. The first device 110 can be integrated with a module to realize simultaneous localization and mapping (SLAM), and can install and run applications for the AR scenes. The present disclosure does not limit a type of the first device 110, which can be a mobile phone, a tablet computer, and a smart wearable device such as AR glasses, an AR helmet, a smart watch, etc. For another example, the first device 110 can be a combination of the AR helmet and a game console to realize a somatosensory AR scene.

The cloud server 120 can store information generated from a mapping device during mapping processes, therefore the first device can be relocated. In a process of performing an AR game, the cloud server 120 can perform an interactive data processing process of the AR game, that is, the cloud server 120 can process data generated from the first device 110 and feedback. In addition, in some embodiments of the present disclosure, the cloud server 120 can be used to provide device configuration requirements of the AR scene, so as to allocate virtual objects to the first device 110 and control the virtual objects in response to spatial state changes of the first device 110.

In the embodiment in which the cloud server 120 illustrated in FIG. 1 participates in processing, the first device 110 can acquire an image and send the image to the cloud server 120. When the cloud server 120 determines a target object of the image, the cloud server 120 can determine a region of interest (ROI) corresponding to a type of the target object, and obtain, by analyzing, anchor point information corresponding to the target object, so as to enable the second device 130 to render and display the anchor point information and the ROI. It is easy for those skilled in the art to understand that in the present disclosure, the anchor point information is stored in the cloud server and sent to the second device, therefore the user can see the target object on the second device with a help of the anchor point information.

It should be understood that device terminals participating in the AR scene of the present disclosure may include other devices in addition to the first device and the second device, and types of the other devices may be the same or different from the first device and the second device here. The present disclosure does not limit the number and the types of the other devices.

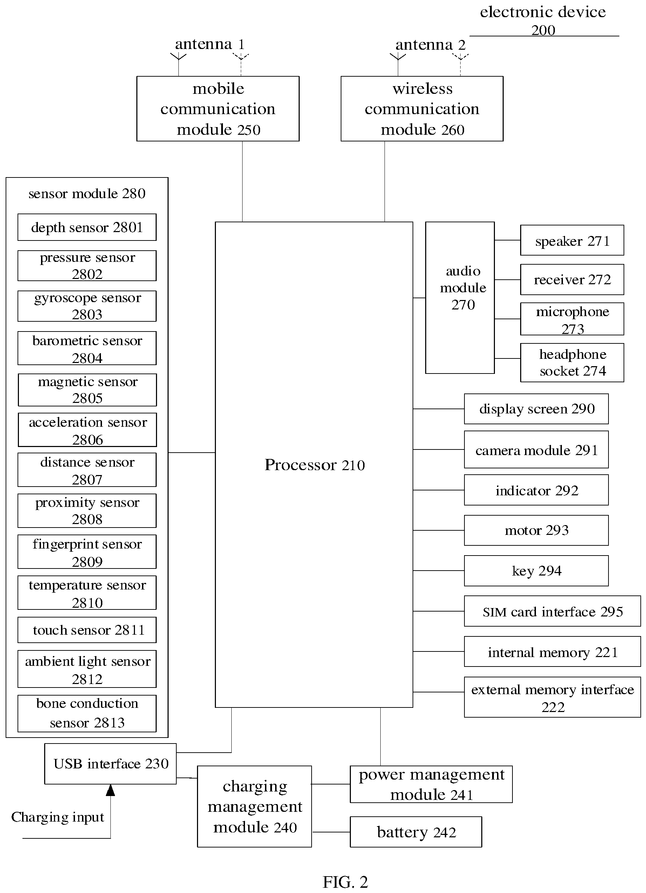

FIG. 2 illustrates a schematic structural diagram of an electronic device according to an embodiment of the present disclosure, that is, the first device may be configured as, for example, the device illustrated in FIG. 2. It should be noted that the electronic device illustrated in FIG. 2 is only an example and should not bring any restrictions on functions and the scope of use of the embodiments of the present disclosure.

The electronic device of the present disclosure includes at least a processor and a memory for storing one or more programs. When the one or more programs are executed by the processor, the processor can implement the AR processing method of the exemplary embodiment of the present disclosure.

Specifically, as illustrated in FIG. 2, an electronic device 200 may include: a processor 210, an internal memory 221, an external memory interface 222, an universal serial bus (USB) interface 230, a charging management module 240, a power management module 241, a battery 242, an antenna 1, an antenna 2, a mobile communication module 250, a wireless communication module 260, an audio module 270, a speaker 271, a receiver 272, a microphone 273, a headphone socket 274, a sensor module 280, a display screen 290, a camera module 291, an indicator 292, a motor 293, a key 294, a subscriber identification module (SIM) card interface 295, etc. The sensor module 280 may include a depth sensor 2801, a pressure sensor 2802, a gyroscope sensor 2803, a barometric sensor 2804, a magnetic sensor 2805, an acceleration sensor 2806, a distance sensor 2807, a proximity sensor 2808, a fingerprint sensor 2809, a temperature sensor 2810, a touch sensor 2811, an ambient light sensor 2812, a bone conduction sensor 2813, etc.

It can be understood that the structure illustrated in the embodiment of the present disclosure does not constitute a specific limitation on the electronic device 200. In other embodiments of the present disclosure, the electronic device 200 may include more or fewer components than the illustrated structure, or combine some components, or split some components, or perform different component arrangements. The illustrated components may be implemented in hardware, software, or a combination of software and hardware.

The processor 210 may include one or more processing units. For example, the processor 210 may include an application processor (AP), a modulation and demodulation processor, a graphics processing unit (GPU), an image signal processor (ISP), a controller, a video codec, a digital signal processor (DSP), a baseband processor and/or a neural-network processing unit (NPU), etc. Among them, different processing units can be independent devices or integrated in one or more processors. In addition, a memory may be provided in the processor 210 for storing instructions and data.

The USB interface 230 is an interface that conforms to USB standard specification, which can be a mini-USB interface, a micro-USB interface, or a USB Type-C interface, etc. The USB interface 230 can be used to connect a charger to charge the electronic device 200, and can further be used to transmit data between the electronic device 200 and peripheral devices. It can further be used to connect headphones and play audio through the headphones. The USB interface 230 can further be used to connect other electronic devices, such as AR devices.

The charging management module 240 is used to receive charging input from the charger. The charger can be a wireless charger or a wired charger. The power management module 241 is used to connect the battery 242, the charging management module 240 and the processor 210. The power management module 241 can be used to receive input from the battery 242 and/or the charging management module 240 and supply power to the processor 210, the internal memory 221, the display screen 290, the camera module 291, the wireless communication module 260, and the like.

A wireless communication function of the electronic device 200 can be realized by the antenna 1, the antenna 2, the mobile communication module 250, the wireless communication module 260, the modulation and demodulation processor, the baseband processor, etc.

The mobile communication module 250 can be used to provide wireless communication solutions including 2-generation wireless telephone technology (2G)/3G/4G/5G applied to the electronic device 200.

The wireless communication module 260 can be used to provide wireless communication solutions applied to the electronic device 200 including wireless local area networks (WLAN) (such as wireless fidelity (Wi-Fi) networks), BLUETOOTH (BT), global navigation satellite system (GNSS), frequency modulation (FM), near field communication (NFC), and infrared technology (IR).

The electronic device 200 can realize a display function through the GPU, the display screen 290, the application processor, etc. The GPU is a microprocessor for image processing, which connects the display screen 290 and the application processor. The GPU can be used to perform mathematical and geometric calculations, and render graphics. The processor 210 may include one or more GPUs that execute program instructions to generate or change display information.

The electronic device 200 can realize a camera function through the ISP, the camera module 291, the video codec, the GPU, the display screen 290, the application processor, etc. In some embodiments, the electronic device 200 may include one or N numbers of the camera modules 291, and N is a positive integer greater than 1. If the electronic device 200 includes the N numbers of cameras, one of the N numbers of cameras is a main camera.

The internal memory 221 can be used to store computer executable program codes, which include instructions. The internal memory 221 may include a storage program area and a storage data area. The external memory interface 222 can be used to connect an external memory card, such as a micro security digital (SD) card, to expand a storage capacity of the electronic device 200.

The electronic device 200 can realize an audio function through the audio module 270, the speaker 271, the receiver 272, the microphone 273, the headphone socket 274, the application processor, and the like. The audio function such as music playing, recording, etc.

The audio module 270 can be used to convert digital audio information into analog audio signal outputs, and be also used to convert analog audio inputs into digital audio signals. The audio module 270 may further be used to encode and decode audio signals. In some embodiments, the audio module 270 may be provided in the processor 210, or some functional modules of the audio module 270 may be provided in the processor 210.

The speaker 271, also known as "horn", can be used to convert audio electrical signals into sound signals. The electronic device 200 can listen to music through the speaker 271 or listen to hands-free calls. The receiver 272, also known as "earpiece", is used to convert audio electrical signals into sound signals. When the electronic device 200 answers a phone call or a voice message, voices can be answered by placing the receiver 272 close to the human ear. The microphone 273, also known as "speaking trumpet" and "mike", can be used to convert sound signals into electrical signals. When making a call or sending a voice message, the user can make a sound through the mouth close to the microphone 273 and input the sound signal to the microphone 273. The electronic device 200 may be provided with at least one the microphone 273. The headphone socket 274 can be used to connect wired headphones.

For the sensors included in the electronic device 200, the depth sensor 2801 can be used to obtain depth information of a scene. The pressure sensor 2802 can be used to sense a pressure signal and can convert the pressure signal into an electrical signal. The gyroscope sensor 2803 can be used to determine a motion pose of the electronic device 200. The barometric sensor 2804 can be used to measure air pressure. The magnetic sensor 2805 may include a Hall sensor. The electronic device 200 can use the magnetic sensor 2805 to detect opening and closing of a flip leather case. The acceleration sensor 2806 can be used to detect an acceleration of the electronic device 200 in all directions (generally three axes). The distance sensor 2807 can be used to measure distance. The proximity sensor 2808 may include, for example, a light emitting diode (LED) and a light detector, such as a photodiode. The fingerprint sensor 2809 can be used to collect fingerprints. The temperature sensor 2810 can be used to detect temperature. The touch sensor 2811 can be used to transmit a detected touch operation to the application processor to determine a type of this touch event. Visual output related to the touch operation can be provided through the display screen 290. The ambient light sensor 2812 can be used to sense a brightness of an ambient light. The bone conduction sensor 2813 can be used to acquire vibration signals.

The key 294 may include a power on key, a volume key, etc. The key 294 may be a mechanical key or a touch key. The motor 293 can generate vibration prompts. The motor 293 can be used for vibrate alert or touch vibration feedback. The indicator 292 may be an indicator light, which can be used to indicate a charge state, a charge change, messages, missed calls, notifications, etc. The SIM card interface 295 may be used to connect a SIM card. The electronic device 200 interacts with the network through the SIM card to realize the functions of call and data communication.

The present disclosure further provides a computer readable storage medium, which can be included in the electronic device described in the above embodiment, or it can exist alone without being assembled into the electronic device.

The computer readable storage medium may be, for example, but is not limited to, one of a system, an apparatus and a device with electricity, magnetism, optics, electromagnetism, infrared ray, or semiconductor, or any combination of the above. More specific examples of the computer readable storage media may include, but be not limited to, electrical connections with one or more wires, portable computer disks, hard disks, random access memory (RAM), read only memory (ROM), erasable programmable read only memory (EPROM or flash memory), optical fibers, portable compact disk read only memory (CD-ROM), optical storage devices, magnetic storage devices or any suitable combination of the above. In the present disclosure, the computer readable storage medium may be any tangible medium containing or storing programs, which may be used by or in combination with an instruction execution system, apparatus, or device.

The computer readable storage medium may send, propagate, or transmit programs for use by or in combination with the instruction execution system, apparatus, or device. Program codes of the computer readable storage medium can be transmitted by any suitable manner, including but not limited to: wireless, wire, optical cable, radio frequency (RF), etc., or any suitable combination of the above.

The computer readable storage medium is stored with one or more programs therein, and when the one or more programs are executed by the electronic device, the electronic device realizes a method described in the following embodiment.

The flowcharts and block diagrams in the attached drawings illustrate possible architectures, functions, and operations of systems, methods, and computer program products according to various embodiments of the present disclosure. In this regard, each block in the flowchart or block diagram can represent a module, a program segment, or a part of the code; and the module, the program segment, or the part of the code contains one or more executable instructions for realizing specified logical functions. It should also be noted that in some alternative implementations, the function marked in the block may also occur in a different order than those marked in the drawings. For example, two consecutive blocks can actually be executed in basically parallel, or the two consecutive blocks can be executed in the opposite order, which depends on the function involved. It should also be noted that each block in the block diagram or flowchart and the combination of blocks in the block diagram or flowchart can be realized by a dedicated hardware-based system that performs specified functions or operations, or by a combination of dedicated hardware and computer instructions.

The units described in the embodiments of the present disclosure can be implemented by software or hardware, and the described units can also be set in the processor. The names of these units do not constitute a qualification of the unit itself under certain circumstances.

In technical solutions provided by some embodiments of the present disclosure, a cloud server recognizes the image outputted from a first device to obtain a target object of an image, determines a ROI of the target object when a type in associated object types is the same as a type of the target object, sends the ROI and the type of the target object to a second device to enable the second device to render, based on anchor point information obtained by analysis, the ROI to display the target object. On the one hand, compared with using a terminal device as an AR platform in the related art, the embodiment of the present disclosure provides a cloud server architecture for supporting the terminal device, and the cloud server is used to recognize images and match types to recognize the ROI. Because the cloud server has rich computing resources, it will not be affected by the performance of the terminal device itself, and complex algorithms are migrated to the cloud server, which can improve the calculation efficiency and accuracy, therefore the accuracy and efficiency of operation in the AR scene can be improved. On another hand, because the cloud server handles the complex computing processes, it reduces the resource consumption of the terminal device, does not increase loads of the terminal device, improves reliability, reduces limitations, and increases the scope of application. On a still another hand, the target object of the image is recognized through the cloud server, and an appropriate way is selected to determine the ROI according to the object matching results, and then the anchor point information is analyzed, the second device can display the target object according to the anchor point information, which improves the efficiency and convenience of displaying the target object.

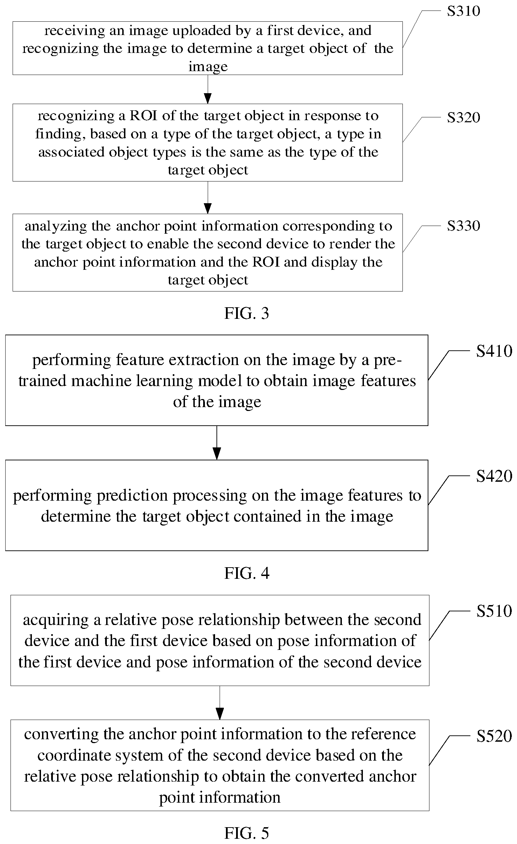

FIG. 3 illustrates a schematic flowchart of an AR processing method according to an embodiment of the present disclosure. Referring to FIG. 3, taking the cloud server as an execution subject, the AR processing method may begin from block S310 to block S330, which are described in detail as follows.

At the block S310, receiving an image uploaded by a first device, and recognizing the image to determine a target object of the image.

In the embodiment of the present disclosure, the first device may be any one of a plurality of AR devices that perform a multi-user AR interaction process. The first device may be a terminal device with image acquisition function or an AR device. Specifically, the image can be acquired through a configured front camera or a plurality of rear cameras. The first device can support an existing AR engine to facilitate AR interaction based on the existing AR engine. A type of the first device may include but be not limited to a mobile phone, a tablet, AR glasses, an AR helmet, etc.

The first device may further include AR applications, a camera, a SLAM module and an inertial measurement unit (IMU). When a starting operation of a preset application on the first device is detected, a scene image of a current environment can be captured by the first device as the image in a built map, and depth information corresponding to the captured image can be obtained by using its equipped depth sensor. The preset application can be an application with AR function selected by the user from installed applications on the terminal device, such as the AR application.

In the embodiment of the present disclosure, the captured image may be a still image or an image in a moving state, etc. The image may include one or more objects. For example, when capturing an image of a cat, an environment around the cat, such as cups, bear dolls, etc., may be captured, and the cat, cups, bear dolls, etc. are the objects included in the image.

After the first device acquires the image, it can output the captured image to the cloud server based on the AR engine contained therein. The cloud server may include an object recognizing and tracking module and an anchor management module. The object recognizing and tracking module may be used to recognize the image and track a recognized target object. The anchor management module may be used to perform management operation on anchor point information, such as adjustment, modification or addition. It should be noted that the cloud server in the embodiment of the present disclosure and the modules of the cloud server have platform independence and can support all platforms with AR capabilities. The first device can continuously send the captured image to the cloud server to improve the transmission efficiency and ensure the continuity of recognition.

After receiving the image sent from the first device, the cloud server can recognize the image to determine the target object contained in the image. The target object can be image content or elements contained in the image, and the target object can be an object such as cat, dog, table, or people. The target object of the image can be one or more, which is not limited here.

When the cloud server recognizes the image, it can use a pre-trained machine learning model to perform the recognizing by the object recognizing and tracking model, so as to improve the recognizing efficiency and accuracy. The pre-trained machine learning model can be, for example, a convolutional neural networks (CNN). The present disclosure does not limit a model structure and parameter configuration of the machine learning model.

The present disclosure further provides a training method of a machine learning model. The training method can be implemented by the cloud server, or the pre-trained machine learning model can be uploaded to the cloud server by other terminal devices after the training is completed.

FIG. 4 illustrates a schematic flowchart of recognizing a target object of an image. Please refer to FIG. 4, the recognizing a target object of an image can be performed by block S410 and block S420.

At the block S410, performing feature extraction on the image by a pre-trained machine learning model to obtain image features of the image.

At the block S420, performing prediction processing on the image features to determine the target object of the image.

In the embodiment of the present disclosure, a convolution layer, a pooling layer and a fully connected layer of the pre-trained machine learning model can be used to extract feature data used to characterize features or characteristics of the image as the image features. A size and number of convolution kernels in the convolution layer can be set according to actual needs. The feature data may include, but are not limited to, shape features, texture features, and the like.

In order to improve the accuracy of the extraction of the feature data, a machine learning model can be trained to obtain the pre-trained machine learning model. Specifically, a process of training the machine learning model may include: training the machine learning model based on sample images and types of the sample images to obtain the pre-trained machine learning model. In the embodiment of the present disclosure, each of the sample images refers to an image with a known type. The sample image can contain the same or different object of the image to be processed, and a scene of the sample image can be the same or different from that of the image to be processed. The number of the sample images can be multiple to improve the accuracy and reliability of the training. Furthermore, the sample images can be used as inputs of the machine learning model to obtain prediction types of the sample images, and the model can be trained based on manually determined types of the sample images until the prediction types are consistent with the manually determined types or until the model converges to end the training model processes and obtain the pre-trained machine learning model, so as to improve the accuracy and reliability of the model.

In the embodiment of the present disclosure, after obtaining the feature data of the image, the image features can be predicted by the pre-trained machine learning model to obtain the types of the objects of the image. The prediction processing here can be realized by a convolution of the image features through the convolution layer and a fully connected processing of the image features through the fully connected layer. Recognizing the objects in the image by the pre-trained machine learning model, the accuracy and efficiency of the object recognizing can be improved. In addition, other suitable methods can also be used to recognize the objects in the image, which are not specifically limited here. After obtaining the type of the target object, text, vectors or other types of marks can be used to uniquely represent each type, so as to quickly distinguish each type through the unique marks.

It should be noted that in the embodiment of the present disclosure, the pre-trained machine learning model can be deployed to the cloud server to improve processing efficiency and reduce the resource consumption of the terminal device.

For example, the image of the current frame captured by the terminal device is an image 1. The image 1 is inputted to the pre-trained machine learning model to convolute the image 1 through the pre-trained machine learning model to obtain that the target object of the image 1 is a cup.

At the step S320, recognizing a ROI of the target object in response to finding (also referred to searching), based on a type of the target object, a type in associated object types is the same as the type of the target object.

In the embodiment of the present disclosure, after determining the type of the target object captured by the first device, the existing associated object types can be searched based on the type of the target object. The associated object types refer to multiple object types with associated anchor point information stored in the cloud server in advance for searching and matching by other terminal devices. Through the anchor management module and the object recognizing and tracking module in the cloud server, the association between the object type and the anchor point information can be established. For the associated object type, it can be associated with the corresponding anchor point information. For example, for a type 1, the corresponding anchor point information may include a location A, a picture B, a text C, and so on.

Specifically, the type of the target object can be matched with each of types of the associated object types to obtain a matching result indicating whether the type of the target object is consistent with the associated object type. If the matching result is that the type of the target object is matched with the type of the associated object types successful, it is determined that there is the same type as the target object in the associated object types stored in the cloud server. If the matching result is that the type of the target object fails to match all the types of the associated object types, it is determined that there is no type with the same type as the target object in the associated object types stored in the cloud server. Furthermore, the anchor point information of the target object can be processed based on the matching result, therefore a virtual model corresponding to the target object can be displayed on the second device to realize the interactive operation in the AR scene. By matching the type of the target object with the associated object type, the anchor point information can be quickly determined according to the matching result, and the efficiency of the determination can be improved.

First, explaining that the matching result is that searching the same type as the target object in the associated object types. If it is determined that the type in the associated object types is the same as the type of the target object, the searched result can be fed back to the object recognizing and tracking module in the cloud server, and the object recognizing and tracking module can be started to recognize the ROI of the target object through the object recognizing and tracking module. The ROI is an image region selected from the image, which is a focus of image analysis. The ROI is selected for further processing. The ROI can be outlined by boxes, circles, ellipses, irregular polygons, etc. Using the ROI to determine the target to be processed in the image can reduce the processing time, improve the efficiency and increase the accuracy. After an object tracking function is enabled, high-quality lossless coding will be performed on important or moving regions. For those regions that are not moved or selected, the code rate and image quality will be reduced, standard definition video compression will be performed, and even the video in those regions will not be transmitted, so as to save network bandwidth occupation and video storage space.

In the AR scene, the first device may be in the moving state with the user's movement, therefore the target object is in the moving state. In order to realize the function of placing the target object and interacting with the target object, the ROI of the target object can be determined by object tracking. Specifically, tracking the target object and determining a position where the target object is placed; and determining a region where the position is located as the ROI of the target object, and tracking the ROI in real time to place the target object in the ROI.

The position where the target object is located can be determined according to a placement object where the target object is located. The placement object is a real object used to support the target object. The placement object can be static or in motion, and can be any object indoors or outdoors, such as tea table, table, sofa and other objects. Therefore, the position of the replacement object corresponding to the target object is used to represent the position of the target object. Furthermore, a region of the replacement object where the target object is located can be determined and regarded as the ROI. Therefore, the ROI in the embodiment of the present disclosure refers to the region for placing the target object. For example, if an object where a target object cup is placed is a tea table, the tea table can be recognized and the region where the tea table is located can be extracted, thus the region where the tea table is located can be tracked in real time to obtain the ROI of the target object cup, so as to place the target object in the region where the tea table is located.

In the embodiment of the present disclosure, a virtual model of a target object in an image generated by a computer can be placed on an object in the real scene. When the object in the real scene moves due to the user moving the camera, or the object itself moves, a tracking algorithm can be used to track the position and/or direction of the object placed in the real scene (i.e., placement object), and generated tracking data can be used to make the target object move with the placement object, so as to continue to maintain the target object on the placement object and produce a real AR effect.

When tracking the placement object, it can continuously and stably track changes of the position and pose of the first device relative to the surrounding environment, and output three-dimensional coordinate information of characteristics of the surrounding environment. Specifically, various appropriate tracking algorithms can be used to achieve, thus the user can move and browse from any angle. Even after leaving and returning, the placed target object will still stay in the original position.

It should be added that after recognizing the ROI of the target object, the type of the target object and the specific information of the ROI can be returned to the SLAM module for further processing.

Continuing to refer to FIG. 3, at the block S330, analyzing the anchor point information corresponding to the target object to enable the second device to render the anchor point information and the ROI and display the target object.

In the embodiment of the present disclosure, the anchor point information can correspond to the target object. Specifically, it can be determined from the anchor point information corresponding to the matched associated object type according to the searched result, that is, the anchor point information corresponding to the matched associated object type is used as the anchor point information of the target object. The anchor point information may specifically include a position of the target object and a content used to describe the target object. The content used to describe the target object can be used to represent what kind of object the target object is, that is, the type of the target object, which can specifically include but not limited to any one or more combinations of text, image, video and audio. The position of the target object refers to coordinates of the virtual model of the target object in a reference coordinate system of the first device. The anchor point information can be generated by the first device and hosted to the cloud server for storage, therefore the second device can view and interact with the target object. When hosting the anchor point information, the first device can send visual mapping data to the cloud server, and the visual mapping data can be processed into sparse point cloud data by the cloud server, so as to facilitate hosting the sparse point cloud data sent from the first device. The visual mapping data may include key point information, map point information and so on.

The second device is in the same scene as the first device, which can be another device in the plurality of AR devices that perform the multi-user AR interaction process, and its type can be the same as the first device. For example, both the first device and the second device are mobile phones, or both are AR glasses. In addition, the types of the first device and the second device can be different, for example, the first device is a mobile phone, and the second device is AR glasses. The present disclosure does not limit the types of the first device and the second device. The second device may include an AR application, a camera, a SLAM module and an inertial measurement unit.

The first device and the second device are powered on separately, and the equipped camera modules are respectively used to scan the real scene and establish their own maps. The camera module can be a monocular camera module, or a binocular or multi camera module.

An upper AR application of the second device can render the region of interest and the target object in an APP layer of the application after obtaining the region of interest framed with the target object and the type information of the target object through the SLAM module. At the same time of the rendering, the anchor point information can be analyzed in response to an analyze request of the terminal device. The terminal device that sends the analyze request can be the terminal device that needs to view the target object, for example, it can be the second device.

Analyzing the anchor point information can make multiple terminal devices in a given physical space use the previously managed anchor point information to establish a common reference framework. The second device will send the visual feature descriptor from the current framework to the cloud server to send the analyze request to the cloud server. After receiving the analyze request, the cloud server will try to match the visual characteristics with the sparse point cloud data in the anchor point information. If the matching is successful, the analyzing of the anchor point information can be performed. In this way, the analyzed anchor point information can be placed in the same position and orientation in the environment for each terminal device to achieve the function of the multi-user AR.

After analyzing the anchor point information corresponding to the target object, the cloud server can send the anchor point information to each second device in the same AR scene that needs to view the target object. Because the first device and the second device are different, their positions and poses may be different, so the cloud server can send the analyzed anchor point information to the second device based on a position relationship between the first device and the second device. Specifically, the anchor point information can be converted from the reference coordinate system of the first device to a reference coordinate system of the second device to obtain converted anchor point information, and the converted anchor point information can be sent to the second device. The reference coordinate system of the first device can be a coordinate system established by the first device according to the current position of the first device when starting the AR application. For example, obtaining a gravity acceleration direction of the first device, taking a current position of the first device as an origin of the reference coordinate system, and taking the gravity acceleration direction as a Z axis of the reference coordinate system. The specific orientations of a X axis and a Y axis perpendicular to the Z axis can be unlimited. The reference coordinate system of the second device can refer to a coordinate system established by the second device according to a current position of the second device when starting the AR application. The implementation method can refer to the reference coordinate system of the first device, which will not be repeated here. By converting the anchor point information from the reference coordinate system of the first device to the reference coordinate system of the second device, the second device can accurately and completely view the anchor point information of the target object.

FIG. 5 illustrates a schematic specific flowchart of converting the anchor point information. Referring to FIG. 5, the converting the anchor point information can specifically include block S510 and block S520.

At the block S510, acquiring a relative pose relationship between the second device and the first device based on pose information of the first device and pose information of the second device.

At the block S520, converting the anchor point information to the reference coordinate system of the second device based on the relative pose relationship to obtain the converted anchor point information.

In the embodiment of the present disclosure, the relative pose relationship may refer to a mapping relationship between the reference coordinate systems of two terminal devices. Specifically, the relative pose relationship between the second device and the first device can be obtained according to a pose of the current frame in the second device relative to the reference coordinate system of the first device and pose information of the current frame. Specifically, point cloud information in a dense map built by the first device can be associated with the image features of the current frame through visual feature matching based on a feature descriptor, so as to obtain the pose of the current frame relative to the reference coordinate system of the first device.

Furthermore, the cloud server can convert the anchor point information from the reference coordinate system of the first device to the reference coordinate system of the second device according to the relative pose relationship. Specifically, it can convert position information of the anchor point information, so as to realize the transmission of the anchor point information of the target object uploaded by the first device to the second device. After the second device obtains the analyzed anchor point information, it can render and display the anchor point information and the ROI of the target object at the same time, so as to display the target object and the region of interest at the corresponding position on the second device, so as to realize the effect of multiple users viewing the target object from different positions in the multi-user AR scene.

Through the technical solution illustrated in FIG. 5, each terminal device can view the anchor point information about the target object uploaded by the first device hosted in the cloud server, which improves the accuracy and pertinence of the second device to view the anchor point information, and accurately realizes the multi-user AR scene.

In addition, the second device can adjust the converted anchor point information of the target object in the same way as the first device by scanning the surrounding scene. An adjustment operation can include but not limited to editing, modifying, and adding. For example, when the target object is a shopping mall, evaluation information and other information associated with the target object can be added to update the anchor point information. After adjusting the converted anchor point information, the second device can upload the updated anchor point information to the anchor management module in the cloud server for hosting, so as to update the anchor point information about the target object stored in the anchor management module. By updating the anchor point information, the latest anchor point information can be grasped in time, and thus the user can view the most accurate virtual object corresponding to the target object, and the interactive experience and realism can be improved.

In the embodiment of the present disclosure, when searching from the associated object types according to the type of the target object, if the type that is the same as the type of the target object is not searched, it is determined that there is no type that is the same as the type of the target object. In this case, the type of the target object can be transmitted to the second device, the second device can build the anchor point information corresponding to the target object according to the type of the target object, and host the anchor point information on the cloud server to display the target object according to the anchor point information.

If the target object detected by the object recognizing and tracking module of the cloud server is not within the scope of the associated objects in the anchor management module, the type of the target object can be fed back to the SLAM module of the second device for subsequent processing through the SLAM module of the second device. Specifically, the type of the target object can be passed to the upper AR application (APP) through the SLAM module of the second device. The AR APP can create the anchor point information about the target object according to a new target object recognized by the object recognizing and tracking module in the cloud server, that is, to add an anchor. The newly created anchor point information can include the position of the target object, the specific content of the target object, and so on. Furthermore, the newly created anchor point information and the type of the recognized target object can be uploaded to the anchor management module for association, therefore the cloud server can host the anchor point information. The process of hosting the anchor point information can include: the second device will send relevant visual mapping data of the anchor point information associated with the target object from the user's environment to the cloud server. After uploading, the anchor point information will be processed into sparse point cloud data by the cloud server, therefore the second device can obtain the sparse point cloud data, determine the relationship between the two devices, and display the target object on the second device according to the sparse point cloud data. The sparse point cloud data can be used to represent a testable description of the three-dimensional real world. By creating and uploading the anchor point information of the target object to the cloud server through the second device, other users can view the anchor point information of the mismatched new target object when using it, and the interactivity and social attributes of the multi-user AR scene can be enhanced.

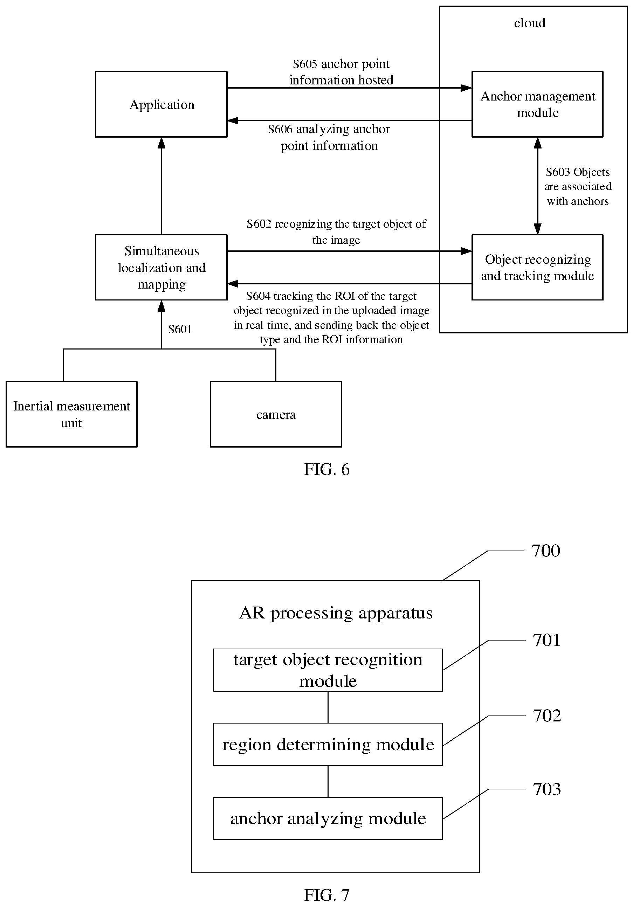

FIG. 6 illustrates a schematic diagram of specific processes of an AR processing method. Referring to FIG. 6, the AR processing method may begin from block S601 to block S606.

At the block S601, an inertial measurement unit and a camera of a first device transmit data to a SLAM module.

At the block S602, the SLAM module transmits captured images to an object recognizing and tracking module in a cloud server to recognize target objects of constantly uploaded images through the object recognizing and tracking module.

At the block S603, an anchor management module in the cloud server searches the existing associated object types according to an object type currently transmitted, if the same object type is found in the associated object types, associates the object with the anchor point information, and feedbacks the result to the object recognizing and tracking module.

In the block S604, the object recognizing and tracking module starts object tracking after receiving the corresponding associated object information, tracks the region of interest of the target object recognized in the uploaded image in real time, and transmits the object type and the region of interest information back to the SLAM module.

In the block S605, the SLAM module sends the region of interest to an application, which renders it, hosts the anchor point information on the cloud server, and sends information to the anchor management module in the cloud server according to the object type information to request to analyze the anchor point information associated with the target object.

At the block S606, the anchor management module returns the analyzed anchor point information associated with the target object to the application.

To sum up, the AR processing method according to the exemplary embodiment of the present disclosure, on the one hand, the cloud server architecture is used to provide support for the terminal device, and the cloud server is used to perform image recognition, type matching, region of interest recognition and other processes. Because the cloud server has rich computing resources, it will not be affected by the performance of the terminal device itself. Migrating complex algorithms to the cloud server can improve computing efficiency and accuracy, so as to improve the accuracy and efficiency of operation in the AR scenes. On another hand, the resource consumption of the terminal device can be reduced, the reliability and stability of the multi-user AR scene can be improved, and the scope of application can be increased. On a still another hand, the cloud server can be used to realize the matching and determination of the anchor point information, which improves the efficiency through the matching, and by determining the region of interest, the accuracy of rendering can be improved, which will not cause too much burden on the terminal device, and it is simple to implement and has strong applicability. On even a still another hand, the anchor point information of the first device is converted through the relative pose relationship between the first device and the second device, and the user can adjust the anchor point information, which can improve the user's sense of participation and enhance the authenticity of reality interaction. Furthermore, by searching the type of the target object in the associated object types, different ways are used to process the anchor point information of different searched results, so as to improve the comprehensiveness and accuracy of the processing.

It should be noted that although the blocks of the methods in the present disclosure are described in a specific order in the accompanying drawings, this does not require or imply that these blocks must be performed in that specific order, or that all the blocks illustrated must be performed in order to achieve the desired results. Additionally, or alternatively, some blocks can be omitted, multiple blocks can be combined into one block for execution, and/or one block can be split into multiple blocks for execution, etc.

Furthermore, an exemplary embodiment of the present disclosure further provides an AR processing apparatus, applied to an AR game in which at least a first device participates.

FIG. 7 illustrates a schematic block diagram of an AR processing apparatus according to an exemplary embodiment of the present disclosure. Please refer to FIG. 7, the AR processing apparatus 700 of the exemplary embodiment of the present disclosure may include the following modules.

A target object recognition module 701 is configured to receive an image uploaded by a first device, and recognize the image to determine a target object of the image.

A region determining module 702 is configured to recognize a region of interest of the target object in response to searching, based on a type of the target object, a type in associated object types is the same as the type of the target object.

An anchor analyzing module 703 is configured to analyze anchor point information corresponding to the target object to enable a second device to render the anchor point information and the region of interest and display the target object.

In an exemplary embodiment of the present disclosure, the target object recognition module may include: a feature extracting module, configured to perform feature extraction on the image by a pre-trained machine learning model to obtain image features of the image; and a prediction module, configured to perform prediction processing on the image features to determine the target object of the image.

In an exemplary embodiment of the present disclosure, the region determining module may include: a position determining module, configured to track the target object and determine a position where the target object is placed; and a region tracking module, configured to determine a region where the position is located as the region of interest of the target object, and track the region of interest in real time to place the target object in the region of interest.

In an exemplary embodiment of the present disclosure, the anchor analyzing module may include: an anchor sending module, configured to analyze the anchor point information corresponding to the target object and send the anchor point information to the second device, in response to an analyze request sent from the second device.

In an exemplary embodiment of the present disclosure, the anchor sending module may include: an anchor converting module, configured to convert the anchor point information from a reference coordinate system of the first device to a reference coordinate system of the second device to obtain converted anchor point information, and send the converted anchor point information to the second device.

In an exemplary embodiment of the present disclosure, the anchor converting module may include: a pose determining module, configured to acquire a relative pose relationship between the second device and the first device based on pose information of the first device and pose information of the second device; and a converting control module, configured to convert the anchor point information to the reference coordinate system of the second device based on the relative pose relationship to obtain the converted anchor point information.

In an exemplary embodiment of the present disclosure, the apparatus further includes: an anchor updating module, configured to update the anchor point information of the target object in response to an adjustment operation of the second device for the anchor point information.

In an exemplary embodiment of the present disclosure, the apparatus further includes: an anchor new module, configured to transmit, in response to determining that there is no type in the associated object types is the same as the type of the target object, the type of the target object to the second device to enable the second device to build anchor point information corresponding to the target object based on the type of the target object, and host the anchor point information to display the target object.

Since each functional module of the AR processing apparatus according to the embodiment of the present disclosure is the same as that in the above method embodiment, it will not be repeated here.

Through the above description of the embodiments, it is easy for those skilled in the art to understand, the exemplary embodiments described here can be implemented by software or by combining software with necessary hardware. Therefore, the technical solutions according to the embodiments of the present disclosure can be embodied in the form of a software product, which can be stored in a non-transitory storage medium (which can be compact disc read-only memory (CD-ROM), USB flash disk, mobile hard disk, etc.) or on a network, including several instructions to enable a computing device (which can be a personal computer, a server, a terminal device, or a network device, etc.) to execute the method according to the embodiments of the present disclosure.

In addition, the accompanying drawings are only schematic descriptions of the processing included in the method according to the exemplary embodiments of the present disclosure, and not a limiting purpose. It is easy to understand that the processes illustrated in the above drawings do not indicate or limit the chronological order of these processes. In addition, it is easy to understand that these processes can be performed synchronously or asynchronously in multiple modules, for example.

It should be noted that although several modules or units of the apparatus for action execution are mentioned in the above detailed description, this division is not mandatory. In fact, according to the embodiments of the present disclosure, the features and functions of two or more modules or units described above may be embodied in one module or unit. Conversely, the features and functions of one module or unit described above can be further divided into multiple modules or units.

After considering the description and practicing the contents disclosed herein, those skilled in the art will easily think of other embodiments of the disclosure. The present disclosure aims to cover any variation, use or adaptive change of the present disclosure, which follows the general principles of the present disclosure and includes the common general knowledge or frequently used technical means in the technical field not disclosed in the present disclosure. The description and the embodiments are considered to be exemplary only, and the scope and spirit of the present disclosure are indicated by the claims.

It should be understood that the present disclosure is not limited to the structures described above and illustrated in the drawings, and various modifications and changes may be made without departing from its scope. The scope of protection of the present disclosure is limited only by the appended claims.

## Claims

1. An augmented reality (AR) processing method, implemented by a cloud server, comprising:
receiving an image uploaded by a first device, and recognizing the image to determine a target object of the image;
recognizing a region of interest (ROI) of the target object in response to finding, based on a type of the target object, a type in associated object types is the same as the type of the target object; and
analyzing anchor point information corresponding to the target object to enable a second device to render the anchor point information and the region of interest and display the target object.

2. The AR processing method according to claim 1, wherein the recognizing the image to determine a target object of the image, comprises:
performing feature extraction on the image by a pre-trained machine learning model to obtain image features of the image; and
performing prediction processing on the image features to determine the target object of the image.

3. The AR processing method according to claim 1, wherein the recognizing a region of interest of the target object, comprises:
tracking the target object and determining a position where the target object is placed;
determining a region where the position is located as the ROI of the target object, and tracking the ROI in real time to place the target object in the ROI.

4. The AR processing method according to claim 1, further comprising:
matching the type of the target object with each of types of the associated object types to obtain a matching result, and processing the anchor point information of the target object based on the matching result to display a virtual model corresponding to the target object on the second device.

5. The AR processing method according to claim 1, wherein the analyzing anchor point information corresponding to the target object, comprises:
analyzing the anchor point information corresponding to the target object and sending the anchor point information to the second device, in response to an analyze request sent from the second device.

6. The AR processing method according to claim 5, wherein the sending the anchor point information to the second device, comprises:
converting the anchor point information from a reference coordinate system of the first device to a reference coordinate system of the second device to obtain converted anchor point information, and sending the converted anchor point information to the second device.

7. The AR processing method according to claim 6, wherein the converting the anchor point information from a reference coordinate system of the first device to a reference coordinate system of the second device to obtain converted anchor point information, comprises:
acquiring a relative pose relationship between the second device and the first device based on pose information of the first device and pose information of the second device; and
converting the anchor point information to the reference coordinate system of the second device based on the relative pose relationship, to obtain the converted anchor point information.

8. The AR processing method according to claim 1, further comprising:
updating the anchor point information of the target object in response to an adjustment operation of the second device for the anchor point information.

9. The AR processing method according to claim 1, further comprising:
transmitting, in response to determining that there is no type in the associated object types is the same as the type of the target object, the type of the target object to the second device to enable the second device to build anchor point information corresponding to the target object based on the type of the target object, and hosting the anchor point information to display the target object.

10. The AR processing method according to claim 1, wherein the hosting the anchor point information, comprises:
receiving relevant visual mapping data of the anchor point information associated with the target object uploaded by the second device; and
processing the anchor point information into sparse point cloud data to enable the second device to obtain the sparse point cloud data for determining a relationship between the first device and the second device and display the target object based on the sparse point cloud data.

11. An AR processing apparatus, applied to a cloud server, comprising:
a target object recognition module, configured to receive an image uploaded by a first device, and recognize the image to determine a target object of the image;
a region determining module, configured to recognize a region of interest of the target object in response to finding, based on a type of the target object, a type in associated object types is the same as the type of the target object; and
an anchor analyzing module, configured to analyze anchor point information corresponding to the target object to enable a second device to render the anchor point information and the region of interest and display the target object.

12. The AR processing apparatus according to claim 11, wherein the target object recognition module comprises:
a feature extracting module, configured to perform feature extraction on the image by a pre-trained machine learning model to obtain image features of the image; and
a prediction module, configured to perform prediction processing on the image features to determine the target object of the image.

13. The AR processing apparatus according to claim 11, wherein the region determining module comprises:
a position determining module, configured to track the target object and determine a position where the target object is placed; and
a region tracking module, configured to determine a region where the position is located as the ROI of the target object, and track the ROI in real time to place the target object in the ROI.

14. The AR processing apparatus according to claim 11, wherein the anchor analyzing module comprises:
an anchor sending module, configured to analyze the anchor point information corresponding to the target object and send the anchor point information to the second device, in response to an analyze request sent from the second device.

15. The AR processing apparatus according to claim 14, wherein the anchor sending module comprises:
an anchor converting module, configured to convert the anchor point information from a reference coordinate system of the first device to a reference coordinate system of the second device to obtain converted anchor point information, and send the converted anchor point information to the second device.

16. The AR processing apparatus according to claim 15, wherein the anchor converting module comprises:
a pose determining module, configured to acquire a relative pose relationship between the second device and the first device based on pose information of the first device and pose information of the second device; and
a converting control module, configured to convert the anchor point information to the reference coordinate system of the second device based on the relative pose relationship to obtain the converted anchor point information.

17. The AR processing apparatus according to claim 11, wherein the apparatus further comprises:
an anchor updating module, configured to update the anchor point information of the target object in response to an adjustment operation of the second device for the anchor point information.

18. The AR processing apparatus according to claim 11, wherein the apparatus further comprises:
an anchor new module, configured to transmit, in response to determining that there is no type in the associated object types is the same as the type of the target object, the type of the target object to the second device to enable the second device to build anchor point information corresponding to the target object based on the type of the target object, and host the anchor point information to display the target object.

19. A computer readable storage medium stored with computer programs therein, wherein the computer programs are configured to, when executed by a processor, to implement the AR processing method according to any one of claims 1-10.

20. An electronic device comprising:
a processor; and
a memory, configured to store one or more programs therein;
wherein the processor is configured to execute the one or more programs stored in the memory to implement the AR processing method according to any one of claims 1-10.
